## Europäisches Patentamt

## European Patent Office

## Office européen des brevets

(19)

(11) Veröffentlichungsnummer: **0 029 004**
**A1**

(12) **EUROPÄISCHE PATENTANMELDUNG**

(21) Anmeldenummer: **80810325.3**

(22) Anmeldetag: **27.10.80**

(51) Int. Cl.³: **F 24 J 3/02**

(30) Priorität: **07.11.79 CH 9960/79**

(43) Veröffentlichungstag der Anmeldung:
**20.05.81 Patentblatt 81/20**

(84) Benannte Vertragsstaaten:
**AT BE DE FR GB LU NL**

(71) Anmelder: **Grenacher, Wolfram**
**Heischerstrasse 10**
**CH-8915 Hausen a/A(CH)**

(72) Erfinder: **Grenacher, Wolfram**
**Heischerstrasse 10**
**CH-8915 Hausen a/A(CH)**

(54) **Webeartiger Flachwärmeabsorber.**

(57) Der webeartige Flachwärmeabsorber kommt in der Solartechnik zur Anwendung. Dieser kann auch als Wärmetauscher oder Radiator eingesetzt werden. Der webeartige Flachabsorber zeichnet sich dadurch aus, dass die Absorberfläche aus einen dünnen Blech besteht, das webeartig mit den wärmeführenden Rohren verbunden ist. Die Wärmeleitung zwischen Absorberblech und Absorberrohr findet im wesentlichen durch mechanischen Kontakt statt.

Wolfram GRENACHER BLATT 2
WEBEARTIGER FLACHWÄRMEABSORBER

Wärmemedium

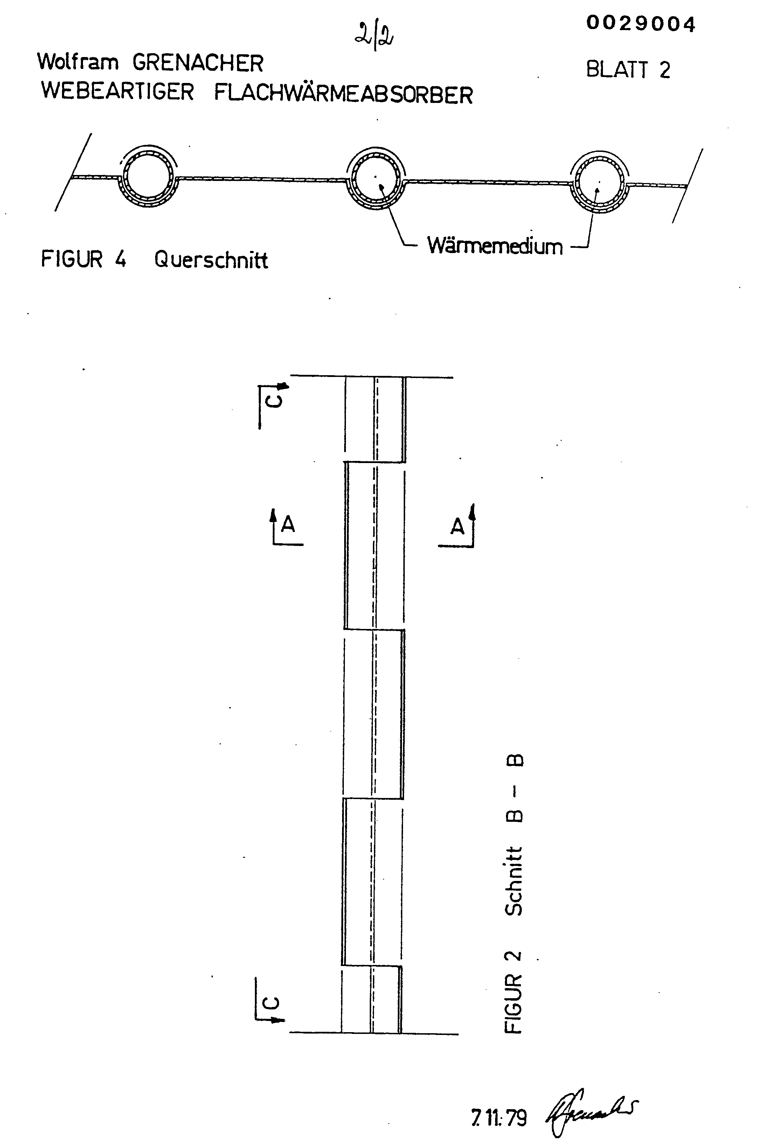

FIGUR 4 Querschnitt

EP 0 029 004 A1

Patentbeschreibung

Die Erfindung betrifft einen Flachwärmeabsorber, wie er bei
Sonnenkollektoren bzw. Heizelementen für die Raumheizung zur Anwendung kommt. Nach dem Stand der Technik werden Flachabsorber
solcher Weise hergestellt, dass die Rohre, welche das Kühlmedium
befördern, entweder auf Flachblech aufgebunden, punktgeschweisst,
oder in gerillte Bleche, in die sog. Sicken, eingelötet werden,
was immer sehr arbeitsaufwendig ist, wenn eine gut wärmeleitende
Verbindung zwischen mediumführenden Rohren und dem Absorberblech
erzielt werden soll. Auch einzelne Bleche, die aufs Rohr geklemmt
werden, kommen zur Anwendung.

Der Erfindung liegt die Aufgabe zugrunde, einen Flachabsorber zu
bauen, in Kupfer oder ähnlichen Werkstoffen wegen den guten Korrosionseigenschaften, der mit möglichst wenig Material- und Arbeitsaufwand in Massen hergestellt werden kann.

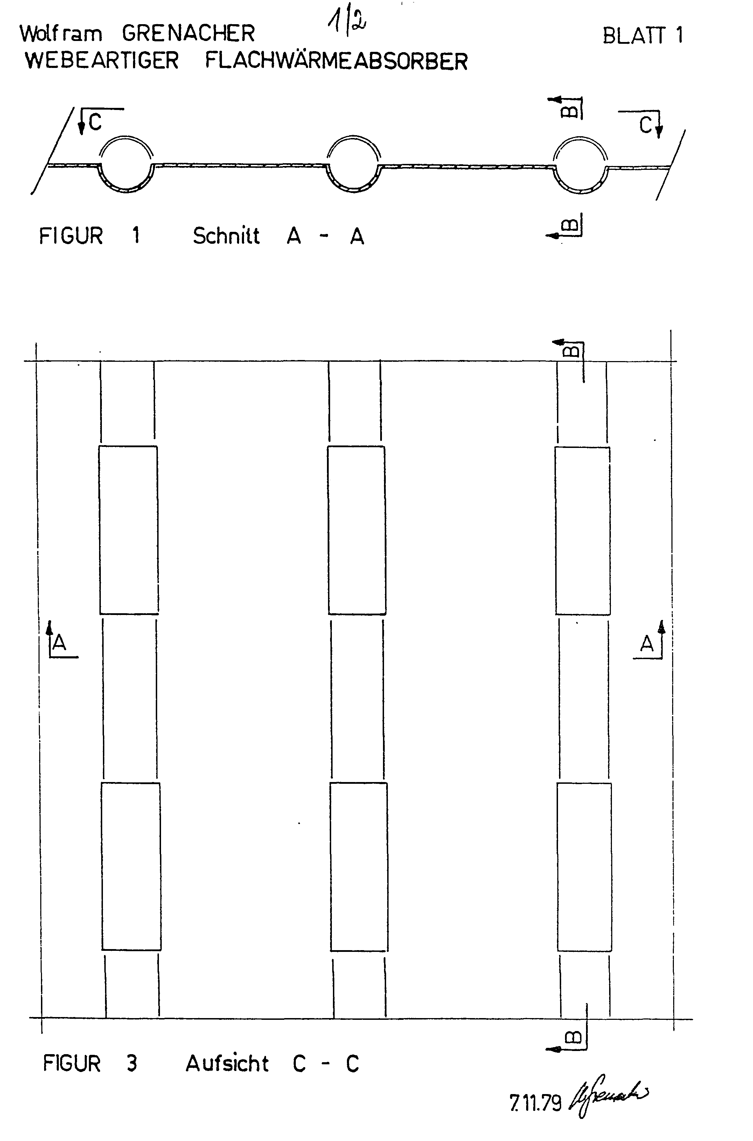

Erfindungsgemäss wird dies dadurch erreicht, dass das Blech mittels
eines speziellen Stanz- und Tiefziehwerkzeugs nach den Zeichnungen
ausgebildet wird. Ein Ausschnitt aus einem solchen Absorberblech ist
mittels den Figuren 1 und 2 (Quer- und Längsschnitt) und der Figur 3
(Aufsicht) dargestellt. Figur 4 (Querschnitt analog Fig. 1) stellt
das Absorberblech mit eingezogenen Rohren dar. (Fig. 1 und 3 sind
auf Blatt 1, Fig. 2 und 4 sind auf Blatt 2 dargestellt.) Solche Leitsicken können direkt in das Bandblech im Abstand von eg. 100 mm eingestanzt werden, oder es werden bereits zugeschnittene Bleche verarbeitet. Durch die erfindungsgemässen Leitsicken wird das mediumführende Rohr abwechslungsweise von unten und von oben umschlungen.

./.

Die Rohre können mühelos in das Blechprofil eingeführt werden, und werden nachträglich an den Enden mit den Sammelrohren verbunden. Durch die erfindungsgemässe gewebeartige Verflechtung von Rohren und Blech ist ein Herausrutschen der Rohre aus der Verbindung mit dem Absorberblech während der Herstellung und nachher grundsätzlich nicht möglich. Dadurch sind neue und einfachere Methoden zur Erzielung der Wärmeleitfähigkeit zwischen Rohr und Absorberblech möglich. Löten ist möglich und einfacher, da ein "Blatern" nicht stattfindet. Durch leichtes Flachwalzen verklemmt sich das Absorberblech mit den Rohren. Durch mechanisches oder hydraulisches Aufblähen der Rohre von innen. Durch physikalisches Aufweiten der Rohre: sog. Gefrieraufweitung.

Wolfram Grenacher                           8915 Hausen a/A, 16.1.1980


Webeartiger Flachwärmeabsorber
_____


Patentansprüche
_____

1. Webeartiger Flachwärmeabsorber-resorber dadurch gekenntzeichnet,
   dass die mediumführenden Rohre so durch das Absorberblech verlaufen, dass sie von diesem abwechslungsweise von oben und unten umschlungen werden. (gemäss Zeichnung)

2. Flachwärmeabsorber nach Anspruch 1 dadurch gekenntzeichnet, dass
   die Wärmeleitung zwischen Blech und Rohr durch leichtes Flachpressen der Rohre bewerkstelligt wurde.

3. Flachwärmeabsorber nach Anspruch 1 dadurch gekenntzeichnet, dass
   die Erstellung der Wärmeleitung zwischen Blech und Rohren durch
   mechanisches oder hydraulisches Ausweiten der Rohre erfolgt hat.

4. Flachwärmeabsorber nach Anspruch 1 dadurch gekenntzeichnet, dass
   die wärmeleitende, satte Verbindung der Rohre mit dem Blech durch
   physikalisches Ausweiten der Rohre mittels gefrorenem Wasser erfolgt hat.

Wolfram GRENACHER
WEBEARTIGER FLACHWÄRMEABSORBER

FIGUR 1 Schnitt A - A

FIGUR 3 Aufsicht C - C

7.11.79

Wolfram GRENACHER
WEBEARTIGER FLACHWÄRMEABSORBER

Wärmemedium

FIGUR 4   Querschnitt

C

A                    A

Schnitt  B — B

C

FIGUR 2

7. 11. 79

Europäisches
Patentamt

**EUROPÄISCHER RECHERCHENBERICHT**

Nummer der Anmeldung

EP 80 81 0325.3

| | **EINSCHLÄGIGE DOKUMENTE** | | **KLASSIFIKATION DER ANMELDUNG (Int. Cl.³)** |
|---|---|---|---|
| Kategorie | Kennzeichnung des Dokuments mit Angabe, soweit erforderlich, der maßgeblichen Teile | betrifft Anspruch | |
| X | DE - A1 - 2 829 173 (TECHNION RESEARCH AND DEVELOPMENT FOUNDATION LTD.) * ganzes Dokument * --- | 1,3 | F 24 J 3/02 |
| X | DE - A1 - 2 833 122 (TORRENS RASAL) * Fig. 2, Positionen 1, 4; Seite 11, Absätze 3, 4 * ---- | 1,2 | |

**RECHERCHIERTE SACHGEBIETE (Int. Cl.³)**

F 24 J 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 09-02-1981 | PIEPER |

EPA form 1503.1 06.78